# EUROPEAN PATENT SPECIFICATION

(11) **EP 1 782 677 B1**
(45) Date of publication and mention of the grant of the patent: **02.09.2009**
(21) Application number: 06003424.6
(22) Date of filing: 20.02.2006
(51) Int. Cl.: A01F 12/34, A01F 12/44

(54) **Sieve assembly for combine harvesters for collecting mash and cereal materials**
Sieb für einen Mähdrescher, um das Mischfutter und Getreidematerialien anzunehmen
Tamis pour moissonneuse-batteuse pour récupérer le mash et des matières céréalières

(30) Priority: 04.11.2005 IT MI20052104
(43) Date of publication of application: 09.05.2007
(73) Proprietor: ALFA AGRICOLA S.R.L., 20122 Milano (IT)
(72) Inventor: Maggi, Pietro, 20122 Milano (IT)
(74) Representative: Cicogna, Franco

(56) References cited:
- EP-A- 1 591 003
- DE-U1- 8 420 168
- US-A- 2 253 296
- US-A- 4 511 466
- US-A- 6 053 812

## Description

### BACKGROUND OF THE INVENTION

The present invention relates to a sieve for combine harvesters for collecting mash and cereals in general.

As is known, prior combine harvesters conventionally comprise sieve assemblies for collecting the so-called "mash" comprising crushed grains and maize cobs, and vegetable fibers to be stored in silos, and cereals in general.

The above mentioned sieve assemblies operate to separate maize cobs, straw and empty wheat ears from grains and remove hulls and small weight impurities, and small particles which are typically removed by a fan.

Said sieve assemblies, in a conventional construction thereof, usually comprise rows of comb blades having comb tooth elements, made of cut metal sheet strip members, which are folded to provide a region for engaging therein a plurality of framework supporting pins.

In collecting cereals in general, or mash, a very important problem to be solved is that prior collecting devices do not provide an optimum cleaning of the grains, since they do not allow a proper passage of waste elements such as cobs, straw and vegetable fiber materials in the product being sieved, whereas said mash material actually comprises grains and a variable rate of maize cobs, straw and other vegetable fibers.

A further problem affecting the prior art is that the above mentioned comb blades, and their tooth elements, frequently provide a material stagnation region, with consequent self-evident operating difficulties.

Yet another problem is that said comb assemblies, which are usually made of a sheet metal material, have not a suitable mechanical strength against the weight of the overlapping material.

Thus, in a case of accidental accumulations, said comb assemblies can be seriously damaged.

The document EP-A-1591003 substantially discloses the preamble of claim 1.

### SUMMARY OF THE INVENTION

Accordingly, the aim of the present invention is to overcome the above mentioned problems, by providing a sieve assembly for combine harvesters for collecting mash and cereal materials in general, allowing to greatly simplify the collecting blade constructions, by providing said collecting blades with a very high operating functionality and allowing them to be quickly and simply assembled.

Within the scope of the above mentioned aim, a main object of the invention is to provide such a sieving assembly allowing to optimize the sieving operations, without any damages, even in a case of high weights and efforts.

Yet another object of the present invention is to provide such a sieving assembly which, owing to its specifically designed constructional features, is very reliable and safe in operation.

Yet another object of the present invention is to provide such a sieving assembly which can be easily made and which, moreover, is very competitive from a mere economic standpoint.

According to one aspect of the present invention, the above mentioned aim and objects, as well as yet other objects, which will become more apparent hereinafter, are achieved by a sieving assembly for combine harvesters for collecting mash and cereal materials in general, according to claim 1.

### BRIEF DESCRIPTION OF THE DRAWINGS

Further characteristics and advantages of the present invention will become more apparent hereinafter from the following detailed disclosure of a preferred, though not exclusive, embodiment of a sieving assembly for combine harvesters for collecting mash and cereal materials, and being illustrated, by way of an indicative, but not limitative, example in the accompanying drawings, where:

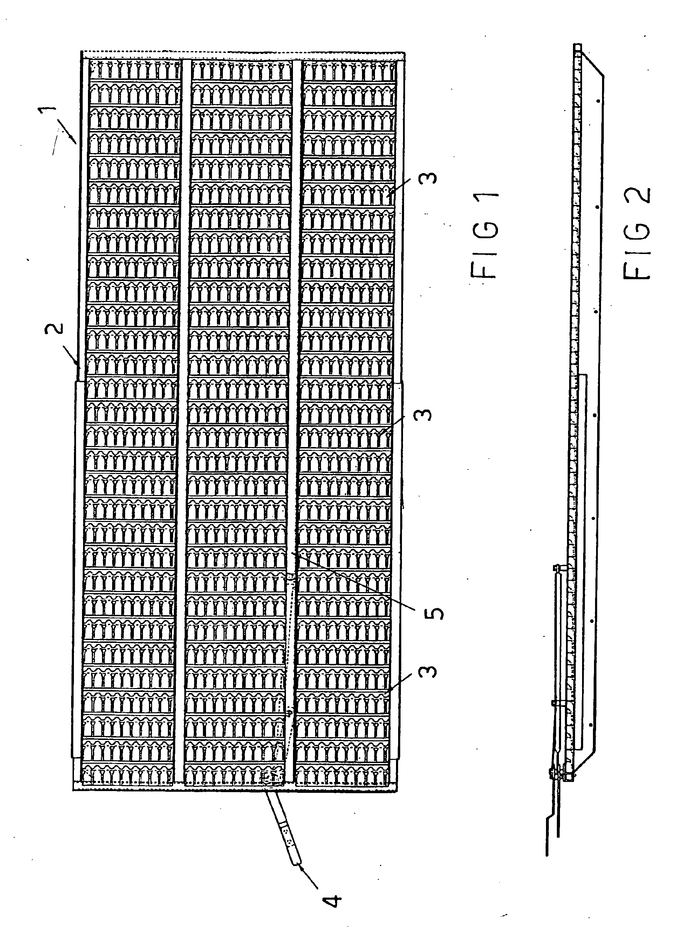

Figure 1 is a schematic top plan view of a sieving assembly according to the invention;
Figure 2 is an elevation view of the sieving assembly according to the invention;

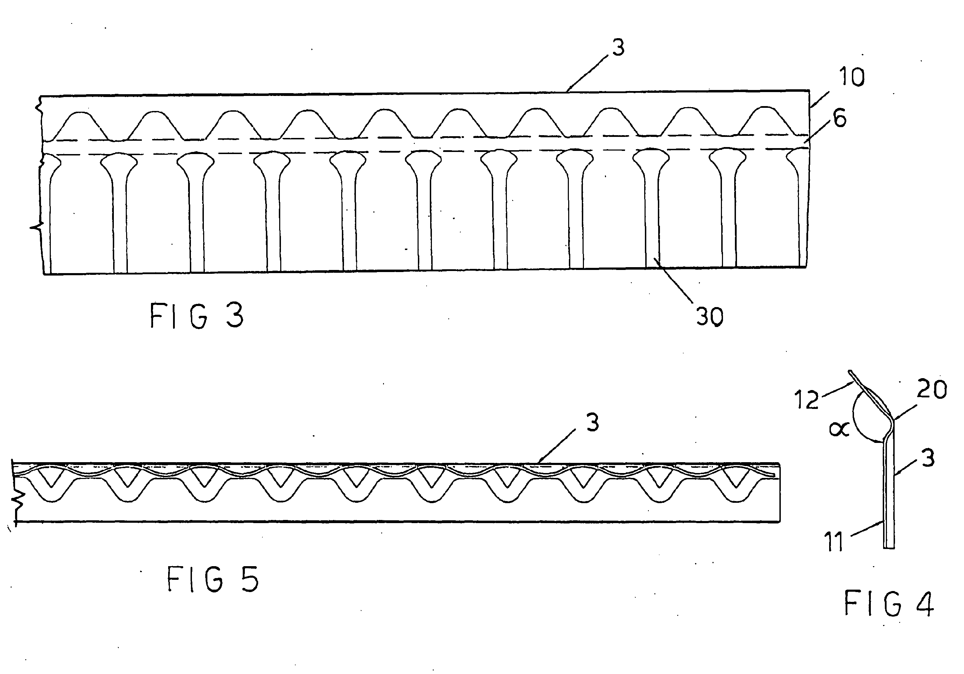

Figure 3 shows, on an enlarged scale and by a top plan view, a detail of a blade element;
Figure 4 is a further side elevation view showing the construction of a single blade element;
Figure 5 is a further front elevation view also showing the construction of the blade element;

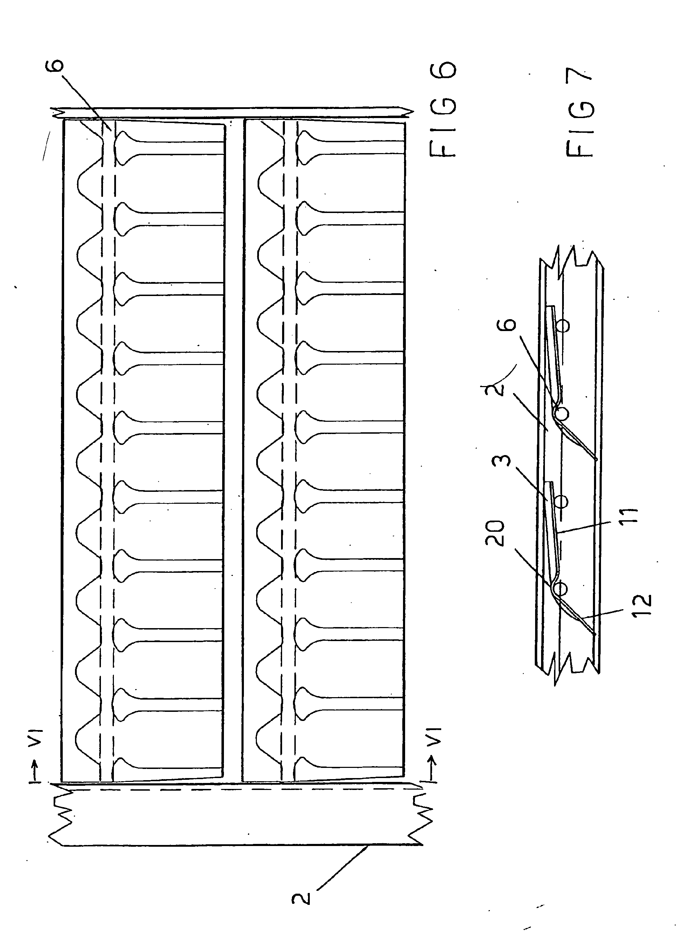

Figure 6 is a schematic top plan view showing a portion of the sieving assembly, the blade elements of which are arranged with an alternating pitch:
Figure 7 is a cross-sectional view showing the subject sieving assembly as cross-sectioned along the line VI-VI of figure 6;

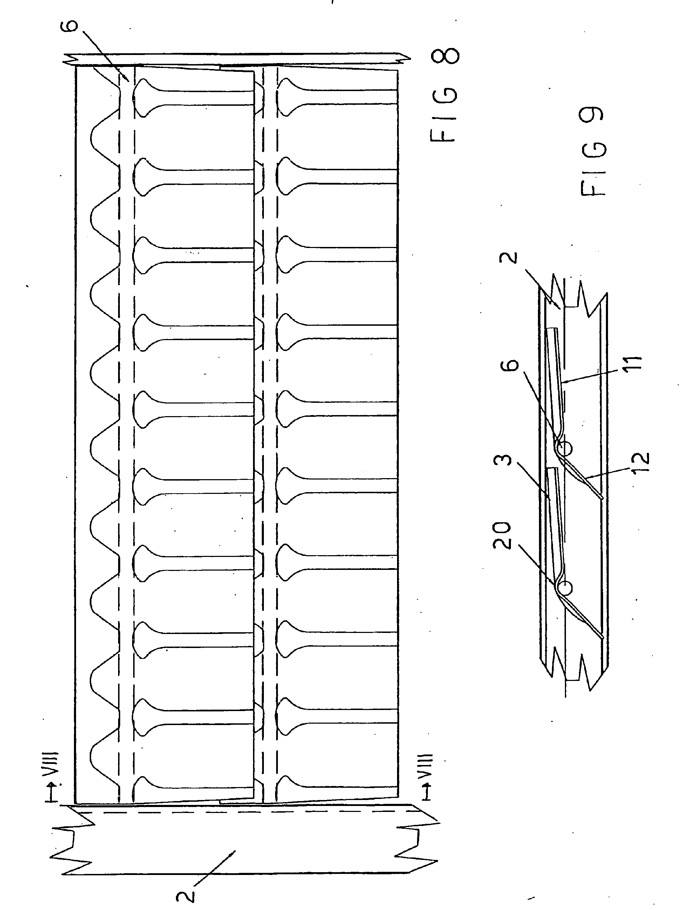

Figure 8 is a schematic top plan view showing a portion of the sieving assembly with the blade elements thereof arranged with a continuous pitch; and
Figure 9 is a further cross-sectional view, as cross-sectioned substantially along the line VIII-VIII of figure 8.

### DESCRIPTION OF THE PREFERRED EMBODIMENT

With reference to the number references of the above mentioned figures, the sieving assembly, particularly for combine harvesters for collecting mash and cereal materials, according to the invention, which has been generally indicated by the reference number 1, comprises a supporting framework 2, supporting a plurality of sieving blades, generally indicated by the reference number 3, which comprise a longitudinally extending strip element.

More specifically, said strip element defines two wings or legs 11 and 12, which are slanted or inclined with respect to one another, and being coupled by a coupling portion 20, providing a central longitudinal rib forming a connection region with pin elements 6 which extend longitudinally of said blade and are so designed as to provide fixed-location blades or variable location blades, through a handle 4, which can be either manually or electrically driven, and operating on adjusting strips which transversely affect all the blades.

A main feature of the present invention is that said blades, comprising said strip elements, are devoid of teeth and are so designed that their wings or legs 11 and 12 are mutually slanted at an angle α, which is preferably of 145°.

One of said wings or legs, and, more specifically, the wing or leg 11 has a curved pattern cross-section, defining a plurality of upward directed convexity ribs, which are advantageously extended for a portion also on the wing 12.

Thus, while using a strip-like element, it is possible to provide a comparatively high mechanical strength or stiffness, allowing to optimize the supporting functions.

The thickness of the strip element is preferably from 0.8 to 1 mm, whereas the width of the first wing is preferably of 40 mm and the width of the second wing is of substantially 20 mm.

From the above disclosure, it should be apparent that the invention fully achieves the intended aim and objects.

In fact, the specifically designed blade elements, defining the above mentioned rib, provide a strong mechanical stiffness thereby it is possible, starting from a conventional metal sheet element, to provide a very strong monolithic body.

Moreover, the slanted wing configuration allows to greatly increase the collecting speed or rate, while allowing to perform a very good cleaning operation preventing any materials from stagnating on the blades.

The invention, as disclosed, is susceptible to several modifications and variations, coming within the scope of the invention as defined by the appended claims.

In practicing the invention, the used materials, as well as the contingent size and shapes, can be any, depending on requirements.

## Claims

1. A sieving assembly (1) for combine harvesters for collecting mash and cereal materials in general, comprising, on a supporting framework (2), a plurality of sieving blades (3) including a strip body folded about a longitudinal axis to define two wings (11, 12) slanted with respect to one another and coupled by a coupling portion (20) defining a central longitudinal rib, providing a connection region for coupling pins (6) supported by said framework (2), on at least one (11) of said wings a plurality of upward directed convexity ribs being provided, **characterized in that** said sieving blades (3) comprise opposite end portions which are parallel to one another and do not include teeth.

2. A sieving assembly, according to claim 1, **characterized in that** said upward directed convexity ribs extend crosswise on said sieving blades (3).

3. A sieving assembly, according to claim 1, **characterized in that** said upward directed convexity ribs are also extended on at least a portion on the other or opposite wing (12).

4. A sieving assembly, according to claim 1, **characterized in that** said wings (11, 12) define therebetween an angle larger than 90°.

5. A sieving assembly, according to claim 1, **characterized in that** said wings define therebetween an angle of substantially 145°.

## Patentansprüche

1. Siebaufbau (1) für Mähdrescher zum Aufnehmen von Grünfutter und Getreidematerialien im Allgemeinen, umfassend auf einem Tragerahmen (2) eine Mehrzahl von Sieblamellen (3), welche einen Streifenkörper umfassen, der um eine Längsachse gefaltet ist, um zwei Flügel (11, 12) zu definieren, welche in Bezug auf einander schräg gestellt sind und durch einen Verbindungsabschnitt (20), der eine zentrale Längsrippe definiert, miteinander verbunden sind, wobei ein Verbindungsbereich für Verbindungsstifte (6), die durch den Rahmen (2) getragen werden, bereitgestellt ist, wobei auf wenigstens einem (11) der Flügel eine Mehrzahl von nach oben gerichteten Ausbuchtungsrippen vorgesehen sind, **dadurch gekennzeichnet, dass** die Sieblamellen (3) gegenüber liegende Endabschnitte umfassen, welche parallel zu einander liegen und keine Zähne aufweisen.

2. Siebaufbau nach Anspruch 1, **dadurch gekennzeichnet, dass** die nach oben gerichteten Ausbuchtungsrippen sich kreuzweise auf den Sieblamellen (3) erstrecken.

3. Siebaufbau nach Anspruch 1, **dadurch gekennzeichnet, dass** die nach oben gerichteten Ausbuchtungsrippen sich auch auf wenigstens einem Abschnitt auf dem anderen oder gegenüber liegenden Flügel (12) erstrecken.

4. Siebaufbau nach Anspruch 1, **dadurch gekennzeichnet dass** die Flügel (11, 12) zwischen einander einen Winkel von mehr als 90° definieren.

5. Siebaufbau nach Anspruch 1, **dadurch gekennzeichnet, dass** die Flügel zwischen einander einen Winkel von im Wesentlichen 145° definieren.

## Revendications

1. Ensemble de tamisage (1) pour des moissonneuses batteuses, destiné au ramassage de brassin et de céréales d'une manière générale, sur un cadre support (2), une pluralité de racles de tamisage (3) incluant un corps de bandelette replié autour d'un axe longitudinal afin de définir deux ailes (11, 12) inclinées l'une par rapport à l'autre et couplées par une partie de couplage (20) définissant une nervure centrale longitudinale, fournissant une région de raccordement pour des broches de couplage (6) supportées par ledit cadre (2), des nervures à convexité orientée vers le haut étant fournies sur au moins l'une (11) desdites ailes, **caractérisé en ce que** lesdites racles de tamisage (3) comprennent des parties d'extrémité opposées qui sont parallèles l'une à l'autre et ne comportent pas de dents.

2. Ensemble de tamisage selon la revendication 1, **caractérisé en ce que** lesdites nervures à convexité orientée vers le haut s'étendent en travers desdites racles de tamisage (3).

3. Ensemble de tamisage selon la revendication 1, **caractérisé en ce que** lesdites nervures à convexité orientée vers le haut sont également étendues sur au moins une partie de l'autre aile ou de l'aile opposée (12).

4. Ensemble de tamisage selon la revendication 1, **caractérisé en ce que** lesdites ailes (11, 12) définissent entre elles un angle supérieur à 90°.

5. Ensemble de tamisage selon la revendication 1, **caractérisé en ce que** lesdites ailes définissent entre elles un angle d'environ 145°.
